# EUROPÄISCHE PATENTSCHRIFT

(11) **EP 2 377 711 B1**
(45) Veröffentlichungstag und Bekanntmachung des Hinweises auf die Patenterteilung: **12.06.2013**
(21) Anmeldenummer: 11162234.6
(22) Anmeldetag: 13.04.2011
(51) Int. Cl.: B60K 25/02, F04D 13/02

(54) **Brennkraftmaschine für ein Kraftfahrzeug**
Combustion engine for a motor vehicle
Moteur à combustion interne pour un véhicule automobile

(30) Priorität: 19.04.2010 DE 102010015564
(43) Veröffentlichungstag der Anmeldung: 19.10.2011
(73) Patentinhaber: MAHLE International GmbH, 70376 Stuttgart (DE)
(72) Erfinder: Baumann, Michael, 72119, Ammerbuch (DE); Conrad, Holger, 98669, Veilsdorf (DE); Gebhardt, Oliver, 96515, Sonneberg (DE); Grüner, Andreas, 73110, Hattenhofen (DE); Janßen, Dr., Martin, 70195, Stuttgart (DE); Jensen, Hans, 73265, Dettingen (DE)
(74) Vertreter: BRP Renaud & Partner

(56) Entgegenhaltungen:
- DE-A1- 10 001 436
- DE-A1- 10 214 637
- DE-A1-102006 041 687

## Beschreibung

Die vorliegende Erfindung betrifft eine Brennkraftmaschine für ein Kraftfahrzeug, mit einem Fluidkreislauf, insbesondere einem Kühlkreislauf, und einer darin angeordneten Fluidpumpe, insbesondere Kühlmittelpumpe, gemäß dem Oberbegriff des Anspruchs 1. Die Erfindung betrifft außerdem eine Fluidpumpegemäß dem Oberbegriff des Anspruchs 9.

Aus der DE 10 2005 024 827 A1 ist eine Brennkraftmaschine für ein Kraftfahrzeug bekannt, wobei in einem Kühlkreislauf der Brennkraftmaschine wenigstens eine Kühlmittelpumpe angeordnet ist. Die Kühlmittelpumpe weist eine Kopplung mit der Brennkraftmaschine und wenigstens einem Elektromotor auf, ebenso wie einen Freilauf für diese Kopplung. Hierdurch kann ein alternativer oder ein gleichzeitiger Antrieb der Kühlmittelpumpe durch die Brennkraftmaschine und/oder den Elektromotor erfolgen.

Aus der DE 10 2006 041 ist eine gattungsgemäße Brennkraftmaschine und eine gattungsgemäße Fluidpumpe bekannt.

Die vorliegende Erfindung beschäftigt sich mit dem Problem, für eine Brennkraftmaschine und eine Fluidpumpe der gattungsgemäßen Art eine verbesserte oder zumindest eine alternative Ausführungsform anzugeben, bei der in verschiedenen Betriebszuständen der Brennkraftmaschine eine bedarfsgerechte Kühlung mit möglichst geringem Aufwand und insbesondere mit geringem Raumbedarf gewährleistet werden kann.

Dieses Problem wird erfindungsgemäß durch die Gegenstände der unabhängigen Ansprüche 1 und 9 gelöst. Vorteilhafte Ausführungsformen sind Gegenstand der abhängigen Ansprüche.

Die vorliegende Erfindung beruht auf dem allgemeinen Gedanken, bei einer an sich bekannten Brennkraftmaschine eines Kraftfahrzeuges mit einem Kühlkreislauf und einer darin angeordneten Kühlmittelpumpe, einen Elektromotor vorzusehen, der ebenso wie die Brennkraftmaschine über ein als Summationsgetriebe ausgebildetes Planetenradgetriebe mit einer im Kühlkreislauf angeordneten Kühlmittelpumpe antriebsverbunden ist. Der Grundgedanke der Erfindung besteht somit darin, einen Grundantrieb, das heißt eine Grunddrehmomentzahl zum Antrieb der Kühlmittelpumpe stets von der Brennkraftmaschine erzeugen zu lassen und bedarfsgerecht Leistungsspitzen durch Zuschalten des Elektromotors abzudecken. Derartige Leistungsspitzen entstehen beispielsweise dann, wenn die Brennkraftmaschine durch eine vorhergehende starke Inanspruchnahme noch eine hohe Temperatur aufweist, sich momentan aber lediglich mit einer Leerlaufdrehzahl dreht. Diese Leerlaufdrehzahl, die auf die Kühlmittelpumpe übertragen wird, reicht nicht zur Kühlung der zuvor stark beanspruchten Brennkraftmaschine aus, so dass in diesem Fall der Elektromotor über das als Summationsgetriebe ausgebildete Planetenradgetriebe zugeschaltet wird. Durch die Wahl eines Planetengetriebes als Summationsgetriebe sind die Drehmomente, die von den jeweiligen Antrieben aufgebracht werden, festgelegt, lediglich die Drehzahl kann variiert werden. Das Hauptdrehmoment wird dabei von Verbrennungsmotor erzeugt, während der Elektromotor ein deutlich geringeres Drehmoment hat, das ausreichend ist um die Drehzahl der Kühlmittelpumpe erhöhen zu können.

Aufgrund der zeitweisen Unterstützungsfunktion des Elektromotors, kann dieser deutlich kleiner ausgelegt werden, wodurch einerseits Kosten und andererseits Gewicht eingespart werden können. Ein alternativer Antrieb der Kühlmittelpumpe ausschließlich durch den Elektromotor ist dabei auch vorgesehen. Es ist auch vorgesehen, die Kühlmittelpumpe entweder nur über den Verbrennungsmotor, anzutreiben, wobei dann der Elektromotor nicht läuft, oder nur über den Elektromotor anzutreiben. Es ist auch möglich je nach Bedarf Freiläufe oder Sperrfunktionen für jeweils einen der beiden antreibenden Motortypen vorzusehen. Dadurch wird erreicht, dass der Antrieb der Kühlmittelpumpe entweder nur über den Verbrennungsmotor oder nur über den Elektromotor erfolgt.

Bei der erfindungsgemäßen Lösung, weist das Planetenradgetriebe ein Gehäuse mit einem darin angeordneten Sonnenrad auf, wobei das Sonnenrad über drei drehbar an einem Planetenradträger angeordnete Planetenräder mit einem Hohlrad antriebsgekoppelt ist. Das Hohlrad bildet dabei einen Rotor des Elektromotors. Das Zuschalten des Elektromotors bewirkt somit eine Drehzahlübertragung auf das Hohlrad und von diesem auf die Planetenräder bzw. auf den Planetenträger und somit auf die Abtriebswelle, auf der das Laufrad der Kühlmittelpumpe sitzt. Das Sonnenrad seinerseits ist drehfest mit einer Antriebswelle, an der der mechanische Antrieb des Verbrennungsmotors angreift, verbunden. Durch die Ausbildung des Hohlrades als Rotor des Elektromotors ist bereits ein Teil desselben innerhalb des Gehäuses des Planetenradgetriebes angeordnet, so dass beispielsweise zusätzlich auch ein Stator des Elektromotors innerhalb des Gehäuses des Planetenradgetriebes angeordnet werden kann und damit der gesamte zur Erzeugung der Zusatzdrehzahl erforderliche Elektromotor bauraumoptimierend innerhalb des Gehäuses des Planetenradgetriebes angeordnet ist. Hierdurch kann eine besonders kompakte Bauweise erreicht werden.

Bei einer weiteren vorteilhaften Ausführungsform der erfindungsgemäßen Brennkraftmaschine, kann das Planetenradgetriebe generell auch einen integralen Bestandteil der Kühlmittelpumpe bilden. Hierdurch ist eine weitere Bauraumoptimierung möglich, da das Planetenradgetriebe nicht mehr separat zur Kühlmittelpumpe angeordnet werden muss, sondern platzsparend innerhalb derselben, wobei dann insbesondere auch ein Gehäuse des Planetenradgetriebes, welches bei einer separaten Anordnung desselben erforderlich wäre, entfallen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Brennkraftmaschine mit einem erfindungsgemäß als Summationsgetriebe ausgebildeten Planetenradgetriebe zur Drehzahlsummation von der Brennkraftmaschine und einem Elektromotor an eine Kühlmittelpumpe,
- Fig. 2: das Planetenradgetriebe mit geöffnetem Gehäuse,
- Fig. 3: eine Schnittdarstellung durch das erfindungsgemäße Planetenradgetriebe,
- Fig. 4: ein Volumenstrom-Drehzahldiagramm.

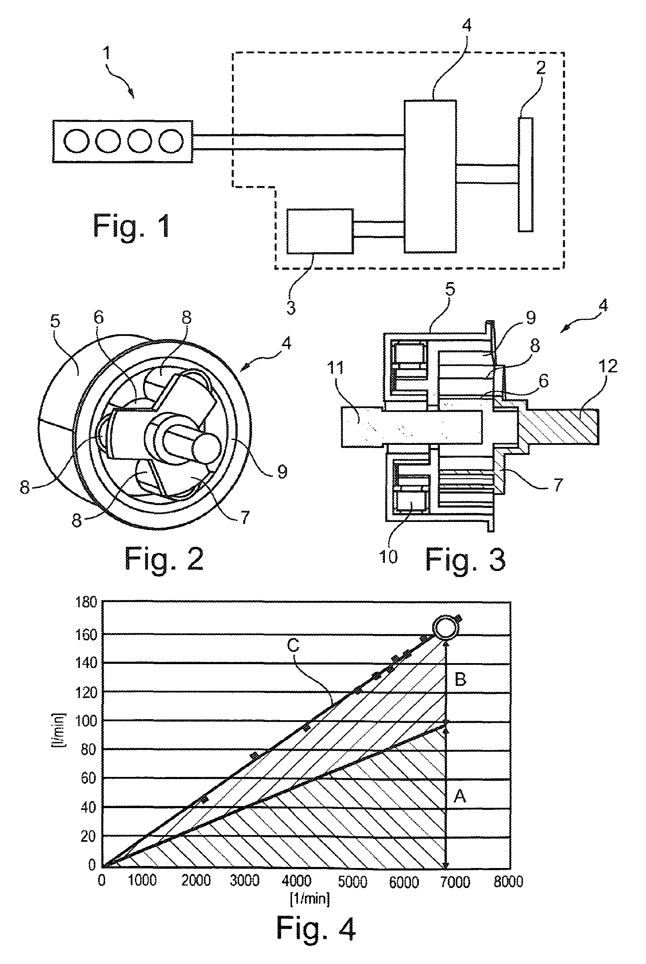

Entsprechend der Fig. 1, weist eine erfindungsgemäße Brennkraftmaschine 1, insbesondere für den Einsatz in einem Kraftfahrzeug, einen nicht näher gezeichneten Kühlkreislauf auf, in welchem eine Kühlmittelpumpe 2 angeordnet ist. Die Kühlmittelpumpe 2 ist dabei erfindungsgemäß summarisch von der Brennkraftmaschine 1 und einem Elektromotor 3 angetrieben, wobei der Elektromotor 3 auch zur Abdeckung von durch die Brennkraftmaschine 1 nicht erreichbaren Drehzahlspitzen dient. Die Brennkraftmaschine 1 und der Elektromotor 3 sind dabei über ein als Summationsgetriebe ausgebildetes Planetenradgetriebe 4 mit der Kühlmittelpumpe 2 antriebsverbunden.

Das erfindungsgemäße Planetenradgetriebe 4, weist gemäß den Fig. 2 und 3 ein Gehäuse 5 mit einem darin angeordneten Sonnenrad 6 auf. Das Sonnenrad 6 ist über drei drehbar an einem Planetenradträger 7 angeordnete Planetenräder 8 mit einem Hohlrad 9 antriebsgekoppelt. Die Anzahl der Planetenräder 8 ist hierbei rein exemplarisch zu verstehen, so dass auch eine andere Anzahl von Planetenrädern 8 von der Erfindung mit umfasst sein soll. Erfindungsgemäß ist nun zudem das Hohlrad 9 als Rotor des Elektromotors 3 ausgebildet, wobei im Gehäuse 5 des Planetenradgetriebes 4 auch gleichzeitig ein Stator 10 des Elektromotors 3 angeordnet ist, so dass in dieser Ausführungsform der gesamte Elektromotor 3 innerhalb des Gehäuses 5 des Planetenradgetriebes 4 angeordnet werden kann.

Wie insbesondere der Fig. 3 zu entnehmen ist, verlaufen eine Antriebswelle 11 sowie eine Abtriebswelle 12 des Planetenradgetriebes 4 koaxial zueinander, wobei - wie beispielsweise gemäß der Fig. 1 gezeigt ist - auch eine andere Wellenanordnung denkbar ist.

Erfindungsgemäß ist der Elektromotor 3 auch zur Unterstützung des durch die Brennkraftmaschine 1 erzeugten Drehzahl am Planetenradgetriebe 4 vorgesehen, so dass beispielsweise eine allein von der Brennkraftmaschine 1 erzeugte und nicht ausreichende Drehzahl zum Antrieb der Kühlmittelpumpe 2 durch die zusätzlich vom Elektromotor 3 erzeugte Drehzahl aufgestockt werden kann. Ein alternativer Antrieb der Kühlmittelpumpe 2 ausschließlich durch den Elektromotor 3 ist dabei vorgesehen.

Generell kann das Planetenradgetriebe 4, wie dies beispielsweise gemäß der Fig. 1 gezeigt ist, auch einen integralen Bestandteil der Kühlmittelpumpe 2 bilden, wobei in diesem Fall die Kühlmittelpumpe 2 durch die unterbrochen gezeichnete Linie begrenzt wäre.

Die Antriebswelle 11 wird durch den mechanischen Antrieb des Verbrennungsmotors angetrieben. Das Ende der Antriebswelle 11 bildet in dem Planetengetriebe 4 die Sonne. Der Kraftfluss geht in diesem Planetengetriebe 4 von der Antriebswelle 11 auf die Sonne von dort auf die Planetenräder 8 diese geben sie wiederum an den Planetenträger 7 weiter, der letztendlich die Abtriebswelle 12 antreibt auf der das Laufrad der Kühlmittelpumpe sitzt.

Betrachtet man die Fig. 4, so kann man eine beispielhafte Wirkungsweise des über das erfindungsgemäße Planetenradgetriebe 4 zuschaltbaren Elektromotors 3 erkennen. In diesem Beispiel ist auf einer Ordinate des Diagramms in Fig. 4 dabei der von der Kühlmittelpumpe 2 geförderte Volumenstrom in Liter je Minute [I/min] aufgetragen, wogegen auf der Abszisse die Drehzahl [1/min] der Kühlmittelpumpe 2 aufgetragen ist. Im Bereich A wird dabei die Kühlmittelpumpe 2 ausschließlich von der Brennkraftmaschine 1 angetrieben, wogegen der Bereich B einen zusätzlichen, ausschließlich durch den Elektromotor 3 erzeugten Volumenstrom darstellt. Bei einer Drehzahl der Kühlmittelpumpe von etwa 3.500 bis 4500 Umdrehungen je Minute wird somit der gesamte Volumenstrom von 100 Litern je Minute zu etwa 60% durch die von der Brennkraftmaschine 1 erzeugte Drehzahl und zu etwa 40% durch die von dem Elektromotor 3 erzeugte Drehzahl gefördert. Generell kann dabei selbstverständlich nicht nur ein Elektromotor 3 vorgesehen sein, sondern noch weitere, um insbesondere Spitzenlasten besser abdecken zu können. Eine Grundlast des von der Kühlmittelpumpe 2 zu fördernden Kühlmittelvolumenstroms wird dabei meist von der Brennkraftmaschine 1 abgedeckt. Die in dem Diagramm der Fig. 4 dargestellte Linie C beschreibt dabei einen Zusammenhang zwischen dem von der Kühlmittelpumpe 2 geförderten Volumenstrom und einer zugehörigen Drehzahl der Kühlmittelpumpe 2.

Der in Fig. 4 dargestellte beispielhafte Verlauf zeigt die proportional verlaufende Addition der Drehzahlen beider Antriebsmotoren. Es ist auch jeder andere Verlauf denkbar, z.B. dass bei niedriger Drehzahl des Verbrennungsmotors der Elektromotor zugeschaltet wird und bei hoher Drehzahl nicht. Die genaue Ansteuerung des Elektromotors wird je nach Bedarf von der Motorsteuerung vorgenommen. In dem Fall, dass die Kühlmittelpumpe nur vom Verbrennungsmotor angetrieben wird, kann man entweder einen Freilauf für den Elektromotor vorsehen, oder aber diesen im Schneckentempo, z.B. mit 1 U/min das Hohlrad 9 antreiben lassen.

Insgesamt kann mit dem erfindungsgemäßen Planetenradgetriebe 4 eine äußerst kompakte Bauweise erreicht werden, insbesondere dann, wenn das Planetenradgetriebe 4 zusätzlich noch einen integralen Bestandteil der Kühlmittelpumpe 2 bildet. Von besonderem Vorteil ist dabei auch, dass durch das erfindungsgemäße Planetenradgetriebe 4 eine bedarfsgerechte, insbesondere im Spitzenlastbereich bedarfsgerechte, Kühlung der Brennkraftmaschine 1 ermöglicht wird.

Die Verwendung verschiedener Antriebe, mechanischer Antrieb des Verbrennungsmotors und einem Elektromotor, sowie deren Kopplung bzw. Entkopplung ist nicht auf das Fluid Kühlmittel beschränkt.

Auch andere in einem Kraftfahrzeug auftretende Fluidströme, insbesondere Flüssigkeiten, wie zum Beispiel Kühlmittel (= Wasser), Schmieröl, Kraftstoffe, etc., die von einer Förderpumpe betrieben werden, können für den Antrieb der Förderpumpe ein erfindungsgemäßes Summationsgetriebe aufweisen.

Es könnte unter einer Förderpumpe auch ein Kompressor eines Kältemittelkreislaufs einer Klimaanlage eines Kraftfahrzeuges verstanden werden.

## Patentansprüche

1. Brennkraftmaschine (1) für ein Kraftfahrzeug, mit einem Fluidkreislauf, insbesondere Flüssigkeitskreislauf, wie zum Beispiel Kühlkreislauf, und einer darin angeordneten Fluidpumpe (2), insbesondere Flüssigkeitspumpe, wie zum Beispiel Kühlmittelpumpe (2), die sowohl von der Brennkraftmaschine (1), als auch von einem Elektromotor (3) oder von beiden zusammen antreibbar ist, wobei die Brennkraftmaschine (1) und der Elektromotor (3) über ein als Summationsgetriebe ausgebildetes Planetenradgetriebe (4) mit der Fluidpumpe (2) verbunden sind, wobei das Planetenradgetriebe (4) ein Gehäuse (5) mit einem darin angeordneten Sonnenrad (6) aufweist, wobei das Sonnenrad (6) über drei drehbar an einem Planetenradträger (7) angeordnete Planetenräder (8) mit einem Hohlrad (9) antriebsgekoppelt ist,
**dadurch gekennzeichnet,**
**dass** das Hohlrad (9) einen Rotor des Elektromotors (3) bildet.

2. Brennkraftmaschine nach Anspruch 1,
**dadurch gekennzeichnet,**
**dass** im Gehäuse (5) des Planetenradgetriebes (4) auch ein Stator (10) des Elektromotors (3) angeordnet ist, so dass der gesamte Elektromotor (3) innerhalb des Gehäuses (5) des Planetenradgetriebes (4) angeordnet ist.

3. Brennkraftmaschine nach Anspruch 1 oder 2,
**dadurch gekennzeichnet,**
**dass** eine Antriebswelle (11) und eine Abtriebswelle (12) des Planetenradgetriebes (4) koaxial verlaufen.

4. Brennkraftmaschine nach einem der Ansprüche 1 bis 3,
**dadurch gekennzeichnet,**
**dass** der Elektromotor (3) zur Unterstützung der durch die Brennkraftmaschine (1) erzeugten Drehzahl am Planetenradgetriebe (4) vorgesehen ist.

5. Brennkraftmaschine nach einem der Ansprüche 1 bis 3,
**dadurch gekennzeichnet,**
**dass** der Elektromotor (3) ausschließlich zur Unterstützung der durch die Brennkraftmaschine (1) erzeugten Drehzahl am Planetenradgetriebe (4) vorgesehen ist.

6. Brennkraftmaschine nach einem der Ansprüche 1 bis 5,
**dadurch gekennzeichnet,**
**dass** das Planetenradgetriebe (4) Bestandteil der Fluidpumpe (2) ist.

7. Brennkraftmaschine nach einem der Ansprüche 1 bis 6,
**dadurch gekennzeichnet,**
**dass** das Fluid das Kühlmittel des Verbrennungsmotors und die Fluidpumpe (2) eine Kühlmittelpumpe ist.

8. Brennkraftmaschine nach einem der Ansprüche 1 bis 7,
**dadurch gekennzeichnet,**
**dass** das Fluid das Schmieröl des Verbrennungsmotors und die Fluidpumpe (2) eine Ölförderpumpe (2) ist.

9. Fluidpumpe (2) für eine Brennkraftmaschine (1) eines Kraftfahrzeugs, die sowohl von der Brennkraftmaschine (1) als auch von einem Elektromotor (3) oder von beiden antreibbar ist, wobei die Fluidpumpe (2) ein als Summationsgetriebe ausgebildetes Planetenradgetriebe (4) aufweist, über das die Brennkraftmaschine (1) und der Elektromotor (3) mit der Fluidpumpe (2) verbunden sind,
**dadurch gekennzeichnet, dass**
das Hohlrad (9) des Planetenradgetriebes (4) einen Rotor des Elektromotors (3) bildet und im Gehäuse (5) des Planetenradgetriebes (4) auch ein Stator (10) des Elektromotors (3) angeordnet ist, so dass der gesamte Elektromotor (3) innerhalb des Gehäuses (5) des Planetenradgetriebes (4) angeordnet ist.

## Claims

1. An internal combustion engine (1) for a motor vehicle, comprising a fluid circuit, in particular liquid circuit, such as, for example, a cooling circuit, and arranged therein a fluid pump (2), in particular liquid pump, such as, for example, a coolant pump (2) which can be driven by the internal combustion engine (1) and also by an electric motor or can be driven by both together, wherein the internal combustion engine (1) and the electric motor (3) are connected to the fluid pump (2) via a planetary drive (4) designed as a summation gear, wherein
the planetary drive (4) has a housing (5) with a sun gear (6) arranged therein, wherein the sun gear (6) is driveably coupled to an annulus gear (9) via three planet gears (8) rotatably arranged on a planet gear carrier (7), **characterized in**
**that** the annulus gear (9) forms a rotor of the electric motor (3).

2. The internal combustion engine according to claim 1,
**characterized in**
**that** in the housing (5) of the planetary drive (4) also a stator (10) of the electric motor (3) is arranged so that the entire electric motor (3) is arranged within the housing (5) of the planetary drive (4).

3. The internal combustion engine according to claim 1 or claim 2,
**characterized in**
**that** a drive shaft (11) and an output shaft (12) of the planetary drive (4) run coaxially.

4. The internal combustion engine according to any one of the claims 1 to 3,
**characterized in**
**that** the electric motor (3) is provided for supporting the speed at the planetary drive (4), which speed is generated by the internal combustion engine (1).

5. The internal combustion engine according to any one of the claims 1 to 3,
**characterized in**
**that** the electric motor (3) is provided exclusively for supporting the speed at the planetary drive (4), which speed is generated by the internal combustion engine (1).

6. The internal combustion engine according to any one of the claims 1 to 5,
**characterized in**
**that** the planetary drive (4) is an integral part of the fluid pump (2).

7. The internal combustion engine according to any one of the claims 1 to 6,
**characterized in**
**that** the fluid is the coolant of the combustion engine and the fluid pump (2) is a coolant pump.

8. The internal combustion engine according to any one of the claims 1 to 7,
**characterized in**
**that** the fluid is the lubricating oil of the combustion engine and the fluid pump (2) is an oil feed pump (2).

9. A fluid pump (2) for an internal combustion engine (1) of a motor vehicle, which fluid pump can be driven by the internal combustion engine (1) as well as by an electric motor (3) or by both, wherein
the fluid pump (2) has a planetary drive (4) designed as a summation gear through which the internal combustion engine (1) and the electric motor (3) are connected to the fluid pump (2), **characterized in**
**that** the annulus gear (9) of the planetary drive (4) forms a rotor of the electric motor (3), and in the housing (5) of the planetary drive (4) also a stator (10) of the electric motor (3) is arranged so that the entire electric motor (3) is arranged within the housing (5) of the planetary drive (4).

## Revendications

1. Moteur à combustion interne (1) pour moteur à combustion interne, comportant un circuit de fluide, notamment un circuit de liquide, comme par exemple un circuit de refroidissement et une pompe à fluide (2) qui y est raccordée, notamment une pompe à liquide, comme par exemple une pompe de milieu de refroidissement (2), qui peut être entraînée tant par le moteur à combustion interne (1) que par un moteur électrique (3) ou par les deux conjointement, dans lequel le moteur à combustion interne (1) et le moteur électrique (3) sont reliés par l'intermédiaire d'une transmission à engrenage planétaire (4) configurée comme une transmission totalisatrice, dans lequel la transmission à engrenage planétaire (4) présente un logement (5) avec un pignon solaire (6) disposé à l'intérieur, dans lequel le pignon solaire (6) est couplé avec entraînement par l'intermédiaire de trois engrenages planétaires (8) disposés rotativement sur un support d'engrenage planétaire (7) avec une couronne dentée (9), **caractérisé en ce que** la couronne dentée (9) forme un rotor du moteur électrique (3).

2. Moteur à combustion interne selon la revendication 1, **caractérisé en ce que** dans le logement (5) de la transmission à engrenage planétaire (4), un stator (10) du moteur électrique (3) est aussi disposé, de sorte que la totalité du moteur électrique (3) soit disposée à l'intérieur du logement (5) de la transmission à engrenage planétaire (4).

3. Moteur à combustion interne selon les revendications 1 ou 2, **caractérisé en ce que** un arbre d'entraînement (11) et un arbre de sortie (12) de la transmission à engrenage planétaire (4) s'étendent coaxialement.

4. Moteur à combustion interne selon une des revendications 1 à 3, **caractérisé en ce que** le moteur électrique (3) est prévu afin d'assister la vitesse de rotation générée par le moteur à combustion interne (1) sur la transmission à engrenage planétaire (4).

5. Moteur à combustion interne selon une des revendications 1 à 3, **caractérisé en ce que** le moteur électrique (3) est prévu exclusivement afin d'assister la vitesse de rotation générée par le moteur à combustion interne (1) sur la transmission à engrenage planétaire (4).

6. Moteur à combustion interne selon une des revendications 1 à 5, **caractérisé en ce que** la transmission à engrenage planétaire (4) est partie intégrante de la pompe à fluide (2).

7. Moteur à combustion interne selon une des revendications 1 à 6, **caractérisé en ce que** le fluide est le milieu de refroidissement du moteur à combustion interne et la pompe à fluide (2) est une pompe à milieu de refroidissement.

8. Moteur à combustion interne selon une des revendications 1 à 7, **caractérisé en ce que** le fluide est le lubrifiant du moteur à combustion interne et la pompe à fluide (2) est une pompe de transport d'huile.

9. Pompe à fluide (2) pour moteur à combustion interne (1) d'un véhicule automobile, qui peut être entraînée tant par le moteur à combustion interne (1) que par le moteur électrique (3) ou les deux, dans laquelle la pompe à fluide (2) présente une transmission à engrenage planétaire (4) configurée comme une transmission totalisatrice, par l'intermédiaire de laquelle le moteur à combustion interne (1) et le moteur électrique (3) sont reliés à la pompe à fluide (2), **caractérisé en ce que** la couronne dentée (9) de la transmission à engrenage planétaire (4) forme un rotor du moteur électrique (3) et dans le logement (5) de la transmission à engrenage planétaire (4) un stator (10) du moteur électrique (3) est aussi disposé, de sorte que la totalité du moteur électrique (3) soit disposée à l'intérieur du logement (5) de la transmission à engrenage planétaire (4).
